# EUROPEAN PATENT APPLICATION

(11) **EP 0 651 066 A1**
(43) Date of publication of application: **03.05.1995**
(21) Application number: 93914977.9
(22) Date of filing: 09.07.1993
(51) Int. Cl.: C22C 27/04, B23K 35/32

(54) **TUNGSTEN ELECTRODE MATERIAL**

(30) Priority: 14.04.1993 JP 112137/93
(71) Applicant: TOHO KINZOKU CO., LTD., Osaka-shi, Osaka 541 (JP); HOKKAI TUNGSTEN INDUSTRIAL CO., LTD., Fukagawa-shi, Hokkaido 074-12 (JP)
(72) Inventor: MATSUDA, Fukuhisa 1-32, Higashi 1-chome Seiwadai, Hyogo 660-01 (JP); USHIO, Masao, Hyogo 666-01 (JP); HASEGAWA, Kiyoyuki, Hokkai Tungsten Ind. Co., Ltd, Hokkaido 074-12 (JP); AKABANE, Katsuyoshi, Hokkai Tungsten Ind. Co.,Ltd, Hokkaido 074-12 (JP); MATSUNO, Takashi, Hokkai Tungsten Ind. Co., Ltd., Hokkaido 074-12 (JP)
(74) Representative: Modiano, Guido, Dr.-Ing.
(86) International application number: JP9300946
(87) International publication number: WO9424328

(57) **Abstract**

An electrode material for a large electric current having excellent arc ignitability and a consumability. This electrode material contains more than 0.02 and less than 0.2 wt.% oxide yttrium and/or oxide cerium. The rest is tungsten.

## Description

### FIELD OF THE INVENTION

The present invention relates to a tungsten electrode material having satisfactory are ignitability and exhaustion resistance of heat plasma, which is an electrode material capable of keeping these properties as an electrode for large current.

### BACKGROUND OF THE INVENTION

An electrode material, including that for TIG welding, for arc or plasma arc must be excellent in arc ignitability and exhaustion resistance.

While treated tungsten has long been used as an electrode material satisfying these conditions, tungsten added with lanthanum oxide, yttrium oxide or cerium oxide has now been employed.

Various tungsten electrodes including those of the above-mentioned treated tungsten are materials excellent in arc ignitability and exhaustion resistance for such purposes as TIG welding, plasma flame spraying, and plasma cutting.

These electrodes are manufactured from tungsten added with an oxide (thorium oxide, ThO₂, lanthanum oxide, La₂O₃, yttrium oxide, Y₂O₃, cerium oxide, CeO₂) in an amount within a range of from 1 to 4 wt.%, respectively.

However, the above-mentioned ranges of practical application of tungsten electrodes cover welding, flame spraying and cutting, and the values of current used range from several amperes to several hundred amperes, or mostly up to 300 amperes in most uses.

New technologies such as spray refining, molten steel heating and high-temperature combustion are recently being developed with the use of plasma arc in addition to these uses and conditions. In order to generate plasma arc for these purposes, electric power of a high current density is necessary. Use of the above-mentioned conventional electrodes for these purposes involves such problems that because of very serious wear, the object cannot be sufficiently achieved technologically as well as economically.

Even among the conventional materials, those containing thorium oxide which is a radioactive substance poses the problems in labor safety and health such as health control of operators. Pollution of air by released gases is another important problem. Safer electrodes are thus required.

### DISCLOSURE OF THE INVENTION

To solve the above-mentioned problems, the present invention was completed on the basis of findings that a material prepared by adding yttrium oxide and/or cerium oxide in a slight amount to tungsten was excellent in arc ignitability and exhaustion resistance, as a result of studies carried out on various constituents. More particularly, the tungsten electrode material of the present invention comprises, in weight percentage, from 0.02% to under 0.2% yttrium oxide and/or cerium oxide and the balance tungsten.

This electrode material is manufactured, for example, as follows. First, yttrium oxide powder cerium oxide powder can be used in place of a part or the whole of yttrium oxide powder is dry-mixed with metallic tungsten powder serving as the raw material until the former powder is uniformly dispersed. The metallic tungsten powder has an average particle size of, for example, from 2 to 4 µ and yttrium oxide and/or cerium oxide powder has an average particles size of, for example, from 1 to 3 µ. The resultant mixed powder is press-formed in accordance with the conventional method of powder metallurgy, and after sintering, the resultant sinter is subjected to a necessary working such as swaging and drawing to prepare a desired electrode material. This electrode material contains yttrium oxide and/or cerium oxide in addition to tungsten which is the main constituent, and is excellent in exhaustion resistance and arc ignitability.

The yttrium oxide and/or cerium oxide content should preferably be within a range of from 0.02% to under 0.2% (weight percentage; the same applies also hereafter). With a yttrium oxide and/or cerium oxide content of under 0.02%, there would be almost no difference in function between the mixture and pure tungsten not containing yttrium oxide and/or cerium oxide. A yttrium oxide and/or cerium oxide content of 0.2% or over results, on the other hand, in a decreased heat resistance and acceleration of exhaustion, thus making it impossible to use this material as electrode for large current.

This tungsten electrode material can be used as an electrode for plasma melting-refining, a tungsten plasma electrode, a plasma welding electrode, or as an electrode for a radiant tube for various illuminating purposes.

### BRIEF DESCRIPTION OF THE DRAWINGS

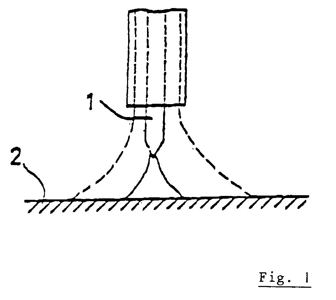

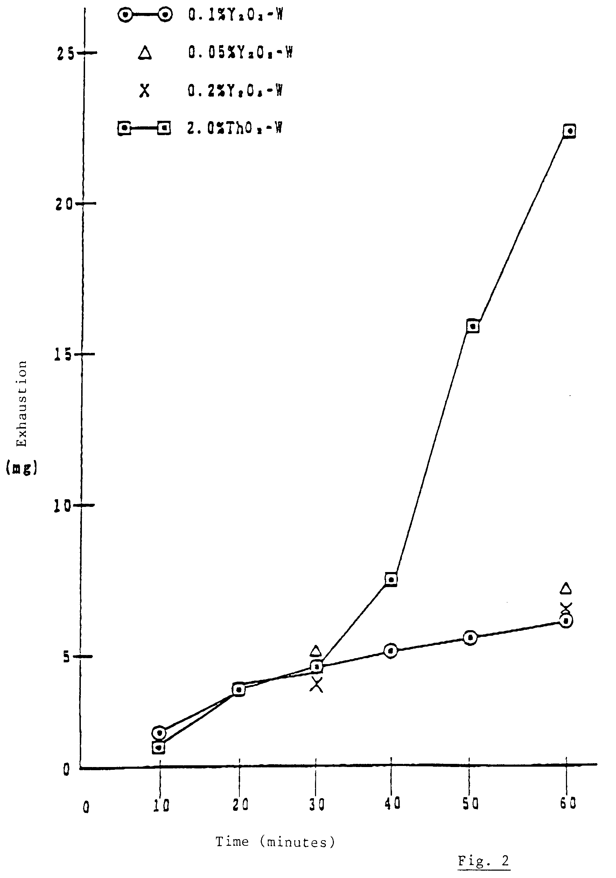

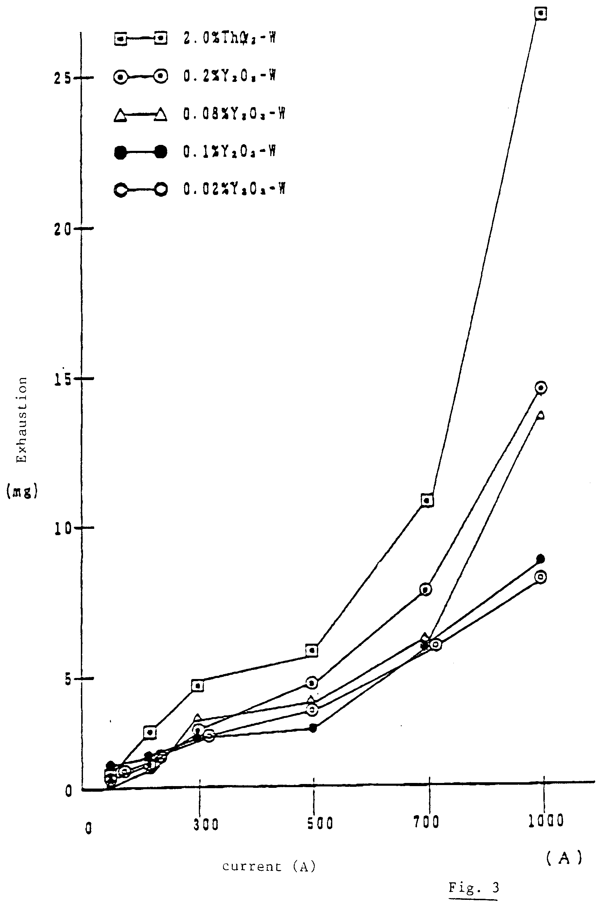

Fig. 1 is a descriptive view illustrating the test state of the present invention; Fig. 2 is a graph illustrating results of a test of exhaustion resistance; and Fig. 3 is a graph illustrating the relationship between the current value and the amount of exhaustion.

### DESCRIPTION OF PREFERRED EMBODIMENTS

Yttrium oxide powder having an average particles size of 1.15 µ was dry-mixed sufficiently with tungsten powder having a purity of at least 99.9% with an average particles size of 2.3 µ. The amounts of added yttrium oxide were such that the yttrium oxide content in the final product becomes such that described in Table 1, Fig. 2 and Fig. 3. The resultant tungsten (W) - yttrium oxide (Y₂O₃) powder was pressed in a mold to form a rectangular bar shaped compact, which was then subjected to a preliminary sintering and an energized sintering to prepare an ingot having a weight of 1,000 gr. Energized sintering was conducted with a sintering current density of about 90% of fusing current.

The thus prepared ingot was subjected to working such as swaging and drawing to finally form a round bar shaped electrode. This electrode had an outside diameter of 3.2 mm and had a tip sharpened into a cone having an angle of 45°. As shown in Fig. 1, this electrode 1 was held in a torch of a TIG welding machine, and an arc was generated with a direct current of 500 A in argon gas (6 ℓ/min) with a water-cooled copper plate as the substrate 2.

Arc was started with an arc length of 4 mm and an electrode length of 4 mm, and a cycle comprising turning on for a second and turning off for ten seconds was repeated a hundred times to investigate the quality of arc ignition. The results are shown in Table 1. For comparison purposes, the results of a test carried out to study arc ignitability of a conventional treated tungsten electrode under the same conditions are also shown in Table 1.

**Table 1**

| Material | Arc ignitability | | | |
|---|---|---|---|---|
| | Repetitions | Success | Failure | Success ratio (%) |
| Example of the invention 0.1% Y₂O₃-W | 100 | 93 | 7 | 93 |
| Example for comparison 2.0% ThO₂-W | 100 | 51 | 49 | 51 |

A tungsten-yttrium oxide electrode having a diameter of 3.2 mm was tested for exhaustion resistance. The results are shown in Fig. 2. The test conditions included an arc length of 4 mm, an electrode length of 4 mm, an argon flow rate of 15 ℓ/minute, and a direct current of 500 A. For six samples cut off from the same electrode, arc was continuously ignited for ten minutes, 20 minutes, 30 minutes, 40 minutes, 50 minutes and 60 minutes. In addition, an electrode having a diameter of 6 mm was prepared to investigate the relationship between the current value and the amount of exhaustion. The results were as shown in Fig. 3. The test conditions included a tip angle of 45°, a gap of 3 mm, and an argon flow rate of 15 ℓ/minute. As is clear from these results, the electrode material of the present invention is far more excellent in exhaustion resistance than the conventional treated tungsten electrode material.
The same results was obtained in the experiments with the tungsten electrode material containing cerium oxide in place of yttrium oxide.

### INDUSTRIAL USEFULNESS

As described above, the tungsten electrode material of the present invention has a satisfactory arc ignitability equal to, or even superior to, that of the conventional treated tungsten electrode material, and is very excellent in exhaustion resistance. Furthermore, as added yttrium oxide and/or cerium oxide is not a radioactive substance, safety is ensure in manufacture as well as in service, and the material of the invention can be suitably applied as a material for various electrodes.

## Claims

1. An electrode material which comprises yttrium oxide and/or cerium oxide in a weight percentage of from 0.02% to under 0.2% and the balance tungsten.
